# EUROPÄISCHE PATENTANMELDUNG

(11) **EP 4 049 887 A1**
(43) Veröffentlichungstag der Anmeldung: **31.08.2022**
(21) Anmeldenummer: 21159329.8
(22) Anmeldetag: 25.02.2021
(51) Int. Cl.: B60L 53/62, B60L 53/63, B60L 53/65, B60L 53/66, B60L 53/67, B60L 53/68

(54) **LADESTATION UND VERFAHREN ZUM LADEN EINES ODER MEHRERER ELEKTRISCHER FAHRZEUGE**

(71) Anmelder: Siemens Aktiengesellschaft, 80333 München (DE)
(72) Erfinder: Schreck, Sebastian, 90439 Nürnberg (DE); Thiem, Sebastian, 91413 Neustadt an der Aisch (DE)

(57) **Zusammenfassung**

Es wird eine Ladestation (1) zum Laden eines oder mehrerer elektrischer Fahrzeuge (2) vorgeschlagen, wobei die Ladestation (1) an ein elektrisches Netz (3) und mittels einer Anschlusskennung (42) an eine lokale Energiemarktplattform (4) angebunden ist, wobei die Ladestation (1) eine Kommunikationseinheit (12) und eine für das Steuern des Ladens vorgesehene Steuereinheit (14) umfasst. Die Ladestation (1) ist dadurch gekennzeichnet, dass die Kommunikationseinheit (12) dazu ausgebildet ist die Anschlusskennung (42) an die lokale Energiemarktplattform (4) zu übermitteln und eine für das Laden des Fahrzeuges (2) vorgesehene und von der übermittelten Anschlusskennung (42) abhängige zeitabhängige Ladeleistung (45) von der lokalen Energiemarktplattform (4) zu empfangen, wobei die Kommunikationseinheit (12) weiterhin dazu ausgebildet ist, aus der empfangenen zeitabhängigen Ladeleistung (45) ein entsprechendes Steuersignal (46) für die Steuereinheit (14) zu erzeugen und das Steuersignal (46) an die Steuereinheit (14) zum Laden des Fahrzeuges (2) zu übermitteln.

Weiterhin betrifft die Erfindung ein Verfahren zum Laden eines elektrischen Fahrzeuges (2) mittels einer erfindungsgemäßen Ladestation (1).

## Beschreibung

Ladestation und Verfahren zum Laden eines oder mehrerer elektrischer Fahrzeuge.

Die Erfindung betrifft eine Ladestation gemäß dem Oberbegriff des Patentanspruches 1 sowie ein Verfahren gemäß dem Oberbegriff des Patentanspruches 8.

Energiesysteme, beispielsweise Stadtteile, Gemeinden, industrielle Anlagen, Industriegebäude, Bürogebäude und/oder Wohngebäude können untereinander, beispielsweise mittels eines Stromnetzes (elektrisches Netz), dezentral, das heißt lokal, Energie austauschen. Hierbei weisen Energiesysteme typischerweise ein oder mehrere Energiesubsystem auf, beispielsweise Gebäude. Die Energiesubsysteme umfassen jeweils mehrere energietechnische Anlagen, die zur Energieerzeugung, einem Energieverbrauch oder einer Energiespeicherung vorgesehen sind.

Durch die Dezentralisierung der Energieversorgung ergibt sich das grundsätzliche technische Problem, die lokale erzeugte Energie effizient zu verteilen und insbesondere ebenfalls lokal zu verbrauchen. Mit anderen Worten ist eine technische Regelung der Verteilung der erzeugten, verbrauchten und/oder gespeicherten Energie erforderlich. Eine solche technische Regelung kann mittels einer lokalen Energiemarktplattform ermöglicht werden.

Mit anderen Worten wird ein lokaler Energiemarkt technisch durch die lokale Energiemarktplattform, die eine Steuerungsplattform ausbildet, verwirklicht. Eine solche lokale Energiemarktplattform/Steuerungsplattform für den Austausch elektrischer Energie ist beispielsweise aus dem Dokument EP 3518369 A1 bekannt.

Grundsätzlich ermöglicht die lokale Energiemarktplattform eine möglichst effiziente lokale Verteilung der im Gesamtsystem erzeugten, verbrauchten und/oder gespeicherten Energie. Unter Verwendung von Optimierungsverfahren (Optimierung) wird Eine möglichst optimale Auswahl von Regelvariablen ermittelt. Mit anderen Worten wird die technische Regelung, die der effizienten Energieverteilung zugrunde liegt, durch eine der Optimierung zugrundeliegenden Zielfunktion abgebildet. Die lokale Energiemarktplattform ermittelt durch Lösen des Optimierungsproblems, das heißt durch ein Extremalisieren der Zielfunktion, die für die Regelung erforderlichen technischen Werte. Hierbei ist die Zielfunktion mit dem Gesamtsystem, das heißt mit allen am Energieaustausch teilnehmenden Energiesystemen und/oder Energiesubsystemen assoziiert. Typischerweise wird als Zielfunktion der Gesamtenergieumsatz, die Gesamtemissionen oder die Gesamtkosten verwendet. Die Optimierung kann mehrmals am Tag, insbesondere alle 15 Minuten durchgeführt werden.

Nach dem Stand der Technik erfolgt die Regelung der Energieaustausche mittels einer lokalen Energiemarktplattform zwischen örtlich stationären Energiesystemen, die einen festgelegten Netzanschlusspunkt zu einem elektrischen Netz aufweisen. Dadurch hat die lokale Energiemarktplattform Kenntnis darüber, welche positive oder negative Last an welchem Netzanschlusspunkt auftritt. Diese Kenntnis ist zur effizienten Regelung im Rahmen des gegebenen elektrischen Netzes erforderlich.

Im Hinblick auf elektrische Fahrzeuge, die im Gegensatz zu Energiesystemen, nicht stationär, das heißt beweglich sind, ist somit ihre Anbindung an eine lokale Energiemarktplattform bisher nicht möglich. Lediglich ein Laden innerhalb eines zum elektrischen Fahrzeug zugehörigen Energiesystems, beispielsweise einem Wohngebäude, welches wiederum an die lokale Energiemarktplattform angebunden ist, ist möglich.

Der vorliegenden Erfindung liegt die Aufgabe zugrunde, eine Ladestation bereitzustellen, welche ein Laden von elektrischen Fahrzeugen innerhalb eines lokalen Energiemarktes ermöglicht.

Die Aufgabe wird durch eine Ladestation mit den Merkmalen des unabhängigen Patentanspruches 1 sowie durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Die erfindungsgemäße Ladestation zum Laden eines oder mehrerer elektrischer Fahrzeuge ist an ein elektrisches Netz und mittels einer Anschlusskennung an eine lokale Energiemarktplattform angebunden, wobei die Ladestation eine Kommunikationseinheit und eine für das Steuern des Ladens vorgesehene Steuereinheit umfasst. Die erfindungsgemäße Ladestation ist dadurch gekennzeichnet, dass die Kommunikationseinheit dazu ausgebildet ist die Anschlusskennung an die lokale Energiemarktplattform zu übermitteln und eine für das Laden des Fahrzeuges vorgesehene und von der übermittelten Anschlusskennung abhängige zeitabhängige Ladeleistung von der lokalen Energiemarktplattform zu empfangen, wobei die Kommunikationseinheit weiterhin dazu ausgebildet ist, aus der empfangenen zeitabhängigen Ladeleistung ein entsprechendes Steuersignal für die Steuereinheit zu erzeugen und das Steuersignal an die Steuereinheit zum Laden des Fahrzeuges zu übermitteln.

Die Ladestation ist über ihre Anschlusskennung an den lokalen Energiemarkt angebunden. Erfindungsgemäß übermittelt die Kommunikationseinheit die Anschlusskennung an die lokale Energiemarktplattform. Das Übermitteln erfolgt, wenn wenigstens ein elektrisches Fahrzeug geladen werden soll. Durch das erfindungsgemäße Übermitteln der Anschlusskennung ist der lokalen Energiemarktplattform der elektrotechnische beziehungsweise elektrische Standort der Ladestation innerhalb des Netzes bekannt. Beispielsweise weist die lokale Energiemarktplattform ein Netzmodell zum Ermitteln des mit der Anschlusskennung assoziierten elektrotechnischen Standortes, beispielsweise ihres Netzanschlusspunktes auf. Die Anschlusskennung kann ebenfalls als Anschlussobjekt-ID bezeichnet werden.

Durch das Übermitteln der Anschlusskennung an die lokale Energiemarktplattform ist somit dieser bekannt, welchen Standort das elektrische Fahrzeug bezüglich des elektrischen Netzes aufweist (elektrotechnischer Standort).

Mit anderen Worten ist mit der Anschlusskennung bevorzugt ein elektrotechnischer Standort innerhalb des elektrischen Netzes assoziiert.

Erst dadurch ist es der lokalen Energiemarktplattform möglich die mit dem Netzanschlusspunkt der Ladestation verknüpften oder assoziierten lokalen Netzrandbedingungen beim Bestimmen der Ladeleistung für das Laden des Fahrzeuges einzuhalten. Mit anderen Worten ermöglicht das erfindungsgemäße Übermitteln der Anschlusskennung die Berücksichtigung der lokalen Netzrandbedingungen, die technisch einzuhalten und erforderlich sind. Weiterhin wird es dadurch technisch erst möglich elektrische Fahrzeuge unabhängig von ihrem Standort und insbesondere unabhängig von ihrem zugeordneten eigenen Heimnetz beziehungsweise eigenen Heimenergiesystems innerhalb eines lokalen Energiemarktes zu laden (oder anlog zu entladen). Mit anderen Worten ist durch die Ladestation eine Teilnahme des elektrischen Fahrzeuges unabhängig von seinem Standort innerhalb des elektrischen Netzes möglich.

Weiterhin kann nicht nur an jeder gemäß der vorliegenden Erfindung ausgestalteten Ladestation im Rahmen des lokalen Energiemarktes, der durch die lokale Energiemarktplattform ausgebildet wird, geladen werden, sondern es kann ergänzend ein Optimieren des Ladestandortes durch die lokale Energiemarktplattform erfolgen. Sind mehrere erfindungsgemäße Ladestationen für das Fahrzeug verfügbar, so kann die lokale Energiemarktmarktplattform eine optimale Ladestation ermitteln, bei welcher der bestmögliche Zeitpunkt zum Laden im Hinblick auf die Netzrandbedingungen beziehungsweise auf die Auslastung des Netzes ist oder das Laden des Fahrzeuges auf die mehreren Ladestationen möglichst optimal verteilen. Mit anderen Worten kann die lokale Energiemarktplattform das Laden des Fahrzeuges zeitlich dadurch verschieben beziehungsweise für das Laden einen optimalen Zeitpunkt dadurch ermitteln, dass das Laden unabhängig vom mit dem Fahrzeug assoziierten Heimnetz an mehreren Ladestation möglich ist. Beispielsweise werden für das Laden des Fahrzeuges am Morgen von 0:00 Uhr bis 7:00 Uhr Ladedaten an die lokale Energiemarktplattform übermittelt, die ein Laden des Fahrzeuges zwischen 8:00 Uhr und 18:00 Uhr an einer Ladestation innerhalb einer Parkgarage und ein Laden des Fahrzeuges zwischen 19:00 Uhr und 24:00 Uhr innerhalb des zum Fahrzeug zugehörigen Heimnetzes vorsehen. Die lokale Energiemarktplattform kann basierend auf den übermittelten Daten, insbesondere basierend auf der Kenntnis in welchem Zeitbereich sich das Fahrzeug an welcher Ladestation befindet, einen oder mehrere bezüglich der Netzrandbedingungen optimalen Ladezeitpunkte für das Laden des Fahrzeuges ermitteln.

Weiterhin wird durch die Berücksichtigung der mit der Anschlusskennung assoziierten lokalen Netzrandbedingungen technisch sichergestellt, dass Spitzenleistungen bei gleichzeitigen Laden mehrere Fahrzeuge innerhalb des elektrischen Netzes reduziert und bestenfalls vermieden werden können.

Das erfindungsgemäße Verfahren zum Laden eines elektrischen Fahrzeuges mittels einer Ladestation, die an ein elektrisches Netz und mittels einer Anschlusskennung an eine lokale Energiemarktplattform angebunden ist, wobei das Fahrzeug zum Daten- und Energieaustausch mit der Ladestation verbunden ist, ist gekennzeichnet dadurch, dass das Laden des Fahrzeuges gemäß einer durch die lokale Energiemarktplattform ermittelten Ladeleistung erfolgt, wobei die lokale Energiemarktplattform die zeitabhängigen Ladeleistung derart ermittelt, dass mit der Anschlusskennung assoziierte lokale Netzrandbedingungen des elektrischen Netzes eingehalten werden.

Es ergeben sich zur erfindungsgemäßen Ladestation gleichartige und gleichwertige Vorteile und Ausgestaltungen des erfindungsgemäßen Verfahrens.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere wird die Optimierung computergestützt durchgeführt. Beispielsweise wird das Optimierungsproblem numerisch gelöst.

Gemäß einer vorteilhaften Ausgestaltung der Erfindung die Kommunikationseinheit zum Datenaustausch mit dem zu ladenden Fahrzeug ausgebildet.

Vorteilhafterweise können dadurch Informationen zwischen der Ladesäule und dem zu ladenden Fahrzeug ausgetauscht werden. Besonders bevorzugt können dadurch fahrzeugspezifische Daten, beispielsweise eine aktuelle Speicherkapazität (Anfangskapazität) des Fahrzeuges, eine maximale Speicherkapazität des Fahrzeuges und/oder eine maximale Ladeleistung mit welcher das Fahrzeug maximal geladen werden darf, sowie teilnehmerspezifische Daten, das heißt Daten, die mit einem Nutzer des Fahrzeuges und seiner Registrierung an der lokalen Energiemarktplattform assoziiert sind, an die Ladestation übermittelt werden.

Die Datenverbindung zwischen dem Fahrzeug kann drahtgebunden oder drahtlos, beispielsweise über das Mobilnetz und/oder über ein lokales Netzwerk erfolgen.

In einer vorteilhaften Weiterbildung der Erfindung ist die Kommunikationseinheit dazu ausgebildet, fahrzeugspezifische Ladedaten von dem Fahrzeug und/oder einem mobilen Endgerät eines Nutzers der Fahrzeuges zu empfangen und diese an die lokale Energiemarktplattform zu übermitteln, wobei die fahrzeugspezifischen Ladedaten wenigstens eine maximale Ladeleistung des Fahrzeuges und eine für das Laden des Fahrzeuges vorgesehene maximale Energiemenge umfassen.

Vorteilhafterweise wird dadurch das Übermitteln der fahrzeugspezifischen Ladedaten an die lokale Energiemarktplattform ermöglicht. Durch das Übermitteln der maximalen Ladeleistung an die lokale Energiemarktplattform wird sichergestellt, dass die von der lokalen Energiemarktplattform ermittelte Ladeleistung die maximale fahrzeugspezifische Ladeleistung respektiert, das heißt zum jedem Zeitpunkt kleiner als diese ist. Die übermittelte maximale Ladeleistung wird hierzu als Nebenbedingung bei der durch die lokale Energiemarktplattform durchgeführten Optimierung verwendet. Dadurch wird das Einhalten der maximalen Ladeleistung beim Laden des Fahrzeuges sichergestellt.

Weiterhin ist das Übermitteln der maximalen Energiemenge, die geladen werden soll, an die lokale Energiemarktplattform vorteilhaft. Die maximale Energiemenge wird ebenfalls bei der Optimierung derart berücksichtigt, dass die zeitlich integrierte ermittelte Ladeleistung im Wesentlich gleich der übermittelten maximalen Energiemenge ist. Mit anderen Worten ist dadurch der lokalen Energiemarktplattform bekannt, wieviel elektrische Energie geladen werden soll. Hierbei ist es nicht erforderlich, dass die maximale Energiemenge zu einem vollständigen Laden des Fahrzeuges beziehungsweise seines Speichers ausreicht. Dies kann jedoch vorgesehen sein. Grundsätzlich kann der Nutzer des Fahrzeuges und somit der Teilnehmer, der an der lokalen Energiemarktplattform registriert ist, die maximale Energiemenge, beispielsweise durch eine Benutzereingabe, festlegen. Hierbei ist jedoch sicherzustellen, dass die maximale Energiemenge kleiner gleich der Speicherkapazität des Speichers des Fahrzeuges ist. Somit ist es vorteilhaft zusätzlich die Speichergröße des Fahrzeuges über die Kommunikationseinheit der Ladesäule an die lokale Energiemarktplattform zu übermitteln.

Weiterhin ist es vorteilhafte, wenn die fahrzeugspezifischen Ladedaten einen Startzeitpunkt und/oder eine Endzeitpunkt des Ladens des Fahrzeuges umfassen.

Dadurch ist der lokalen Energiemarktplattform insbesondere die Parkdauer des Fahrzeuges an der Ladesäule bekannt. Dieser für das Laden des Fahrzeuges vorgesehene Zeitbereich (Differenz aus Endzeitpunkt und Startzeitpunkt) wird dann ebenfalls bei der durch die lokale Energiemarktplattform durchgeführten Optimierung berücksichtigt. Beispielsweise erfolgt das Berücksichtigen derart, dass das Fahrzeug bevorzugt innerhalb des genannten Zeitbereiches unter Einhaltung der maximalen fahrzeugspezifischen Ladenleistung im Wesentlichen vollständig geladen wird.

Gemäß einer vorteilhaften Ausgestaltung der Erfindung umfassen die fahrzeugspezifischen Ladedaten einen Anfangskapazität und/oder eine Endkapazität einer Speicherkapazität des Fahrzeuges.

Dadurch kann vorteilhafterweise die zu ladende Energiemenge ermittelt werden. Bevorzugt ist die Endkapazität im Wesentlichen gleich der maximalen Speicherkapazität des Speichers des Fahrzeuges.

In einer vorteilhaften Weiterbildung der Erfindung ist die Kommunikationseinheit dazu ausgebildet, mit der lokalen Energiemarktplattform assoziierte Anmeldedaten von dem Fahrzeug und/oder einem mobilen Endgerät eines Nutzers des Fahrzeuges zu empfangen und die empfangen Anmeldedaten an die lokale Energiemarktplattform zu übermitteln.

Vorteilhafterweise wird dadurch ein Anmelden des Fahrzeuges an der lokalen Energiemarktplattform ermöglicht. Grundsätzlich erfolgt die Anmeldung an der lokalen Energiemarktplattform teilnehmerspezifisch, das heißt der Teilnehmer und vorliegend ein Nutzer des Fahrzeuges, beispielsweise sein Fahrer, ist an der lokalen Energiemarktplattform, beispielsweise mittels einer Anmeldekennung, registriert. Alternativ oder ergänzend kann das Fahrzeug über eine Anmeldekennung beziehungsweise Anmelde-ID an der lokalen Energiemarktplattform registriert sein. Vorteilhafterweise übermittelt die Kommunikationseinheit diese Anmeldedaten an die lokale Energiemarktplattform. Dadurch ist der lokalen Energiemarktplattform grundsätzlich bekannt, welcher registrierter Teilnehmer sich an welchem elektrischen Standort befindet.

Weiterhin können die Anmeldedaten nutzerspezifische Daten beziehungsweise teilnehmerspezifische Daten umfassen. Beispielsweise bestimmte Nutzereinstellungen, Tarife und/oder maximale Entgelte für den Bezug der für das Laden des Fahrzeuges elektrischen Energien. Dadurch wird der lokalen Energiemarktplattform ein besonders bevorzugtes Angebot für den Bezug der für das Laden vorgesehen elektrischen Energie übermittelt. Das Angebot umfasst die maximale Energiemenge, die innerhalb des Zeitbereiches geladen werden soll, das maximale Entgelt für diesen Zeitbereich sowie den elektrischen Standort, der über den Netzanschluss beziehungsweise der Anschlusskennung der Ladesäule bekannt ist.

Gemäß einer vorteilhaften Ausgestaltung der Erfindung wird eine maximale Ladeleistung der Ladestation an die lokale Energiemarktplattform übermittelt.

Mit anderen Worten übermittelt die Kommunikationseinheit eine maximale Anschlussleistung der Ladeleistung an lokale Energiemarktplattform übermittelt.

Alternativ oder ergänzend liegt diese bereits der lokalen Energiemarktplattform, beispielsweise über die Anschlusskennung, vor. Die maximale Anschlussleistung der Ladestation, die der Anschlusskennung beziehungsweise dem Netzanschlusspunkt der Ladesäule zugehörig ist, ist für das Einhalten der lokalen Netzrandbedingungen erforderlich. Diese kann jedoch der lokalen Energiemarktplattform, beispielsweise über ein Netzmodell und das Erkennen der Ladestation innerhalb des Netzmodells durch ihre Anschlusskennung und/oder durch ein Übermittel an die lokale Energiemarktplattform, bekannt sein. Hierbei kann das Angebot die maximale Anschlussleistung der Ladestation umfassen. Die maximale Anschlussleistung wird wiederum als Nebenbedingung bei der Optimierung, die durch die lokale Energiemarktplattform durchgeführt wird, berücksichtigt. Hierbei kann die maximale Anschlussleistung als lokale Netzrandbedingung aufgefasst werden. Mit anderen Worten umfassen die lokalen Netzrandbedingungen bevorzugt die maximale Anschlussleistung der Ladestation. Weiter lokale Netzrandbedingungen, beispielsweise bezüglich eines Netzanschlusspunktes an ein übergeordnetes elektrisches Netz oder an einer Trafostation, können vorgesehen sein.

Gemäß einer bevorzugten Ausgestaltung der Erfindung umfasst die Ladestation eine Messeinrichtung, welche dazu ausgebildet ist, die für das Laden des Fahrzeuges verwendete Energiemenge zu erfassen.

Vorteilhafterweise wird dadurch sichergestellt, dass das Laden des Fahrzeuges gemäß der durch der lokalen Energiemarktplattform ermittelten Ladeleistung tatsächlich erfolgt ist. Mit anderen Worten wird dadurch ein Prüfen ermöglicht, ob das Laden des Fahrzeuges gemäß der von der lokalen Energiemarktplattform übermittelten zeitabhängigen Ladeleistung erfolgt ist. Hierbei kann ein Abgleich mit der übermittelten maximalen Energiemenge und der durch die Messeinrichtung erfassten Energiemenge vorgesehen sein. Dieser Abgleich kann bevorzugt durch die lokale Energiemarktplattform durchgeführt werden. Die Kommunikationseinheit ist hierzu bevorzugt dazu ausgebildet, die durch die Messeinrichtung erfasste Energiemenge an die lokale Energiemenge zu übermitteln. Hierbei ist es vorteilhaft, wenn die Kommunikationseinheit der lokalen Energiemarktplattform ebenfalls das Ende des Ladens beziehungsweise des Ladevorgangs anzeigt beziehungsweise übermittelt.

In einer vorteilhaften Ausgestaltung der Erfindung erfolgt eine Authentifizierung des mit der lokalen Energiemarktplattform assoziierten Teilnehmers durch die Ladestation, wobei hierbei der an der lokalen Energiemarktplattform registrierte Teilnehmer der Anschlusskennung zugeordnet wird.

Dadurch kann der elektrotechnische Standort (Anschlussort am elektrischen Netz) des Fahrzeuges bezüglich des elektrischen Netzes an dieses übermittelt werden. Bevorzugt erfolgt dies im Rahmen der ISO 15118, das heißt, dass die Ladestation die Norm ISO 15118 erfüllt. Der Standort kann somit ebenfalls durch das Fahrzeug an die lokale Energiemarktplattform, insbesondere im Rahmen eines Angebotes für das Laden, übermittelt werden. Der Standort ist stets für das Einhalten der lokalen Netzrandbedingungen technisch erforderlich.

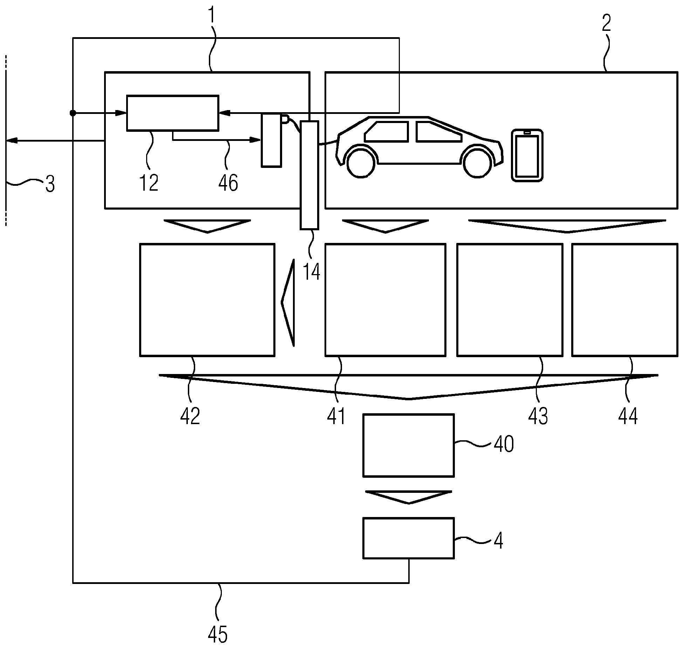

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur eine Ausgestaltung der vorliegenden Erfindung mittels eines Ablaufdiagramms.

Gleichartige, gleichwertige oder gleichwirkende Elemente können in der mit denselben Bezugszeichen versehen sein.

Die Figur zeigt schematisiert ein Laden eines elektrischen Fahrzeuges 2, insbesondere eines Elektroautos, mit einer Ladestation 1 gemäß einer Ausgestaltung der vorliegenden Erfindung.

Die Ladestation 1 ist über einen beziehungsweise ihren Netzanschlusspunkt an ein elektrisches Netz 3 angeschlossen. Mit dem Netzanschlusspunkt und/oder dem elektrischen Netz 3 und mit der Ladestation 1 sind lokale Netzrandbedingungen assoziiert. So weist beispielsweise die Ladestation 1 beziehungsweise der Netzanschlusspunkt eine maximale Ladeleistung auf.

Weiterhin umfasst die Ladestation 1 eine Kommunikationseinheit 12 und eine Steuereinheit 14. Die Kommunikationseinheit 12 ist zum Datenaustausch mit der Steuereinheit 14, zum Datenaustausch mit dem Fahrzeug, zum Datenaustausch mit einer lokalen Energiemarktplattform 4 ausgebildet. Die Kommunikationseinheit 12 kann als Edge-Device bezeichnet werden.

Ferner umfasst die Ladestation 1 eine Steuereinheit 14, die zur Steuerung beziehungsweise Regelung des Ladens des Fahrzeuges 2 beziehungsweise des Ladevorgangs ausgebildet ist. Insbesondere wird durch die Steuereinheit 14 die Ladeleistung, das heißt die Leistung, mit welcher das Fahrzeug 2 zu einem Zeitpunkt geladen wird, geregelt.

Eine lokale Energiemarktplattform 4 ist als übergeordnete Steuereinheit ausgebildet, das heißt, dass diese dazu ausgebildet ist, die Energieaustausche, insbesondere in Form von elektrischer Energie, zwischen mehreren Energiesystemen beziehungsweise Teilnehmern zu steuern. Hierzu führt die Energiemarktplattform 4 eine Optimierung basierend auf einer Zielfunktion und basierend auf Daten, die durch die teilnehmenden Energiesysteme an die lokale Energiemarktplattform 4 übermittelt wurden. In diesem Sinne bildet die Ladestation 1 zusammen mit Fahrzeug 2 ein solches teilnehmendes Energiesystem.

Für die Optimierung ist eine Zielfunktion erforderlich, deren Wert im Rahmen der Optimierung minimiert oder maximiert werden soll. Dies wird ebenfalls als Optimierungsproblem bezeichnet. Die Zielfunktion umfasst typischerweise als Variablen der Optimierung die zeitabhängigen Leistungen, die zum jeweiligen Zeitpunkt zwischen den Energiesystemen ausgetauscht werden sollen. Durch das Minimieren oder Maximieren der Zielfunktion werden diese Leistungen berechnet. Anschließend erfolgen die Energieaustausche zwischen den teilnehmenden Energiesystemen gemäß der berechneten Leistungen. Beispielsweise ist die Zielfunktion beziehungsweise beschreibt diese die ausgetauschte Gesamtenergie. Die lokale Energiemarktplattform kann die Optimierung mehrmals an einem Tag, bevorzugt innerhalb 15 Minutenschritten, durchführen. Dadurch werden die den Energieaustauschen zugehörigen Leistungen alle 15 Minuten neu ermittelt.

Die vorliegende Erfindung ermöglicht es technisch, dass elektrische Fahrzeuge im Sinne von nicht stationären Energiesystemen ebenfalls an einem lokalen Energiemarkt, welcher durch die lokale Energiemarktplattform 4 ausgebildet wird, teilnehmen können. Hierzu ist die erfindungsgemäße Ladestation 1 vorgesehen.

Gemäß der Ausgestaltung der vorliegenden Erfindung weist die Ladestation 1 eine Anschlusskennung 42 bezüglich der lokalen Energiemarktplattform 4 auf. Die Kommunikationseinheit 12 übermittelt die Anschlusskennung 42 an die lokale Energiemarktplattform 4. Dadurch ist der lokalen Energiemarktplattform 4 bekannt, dass am Netzanschlussort der Ladestation 1 ein Laden durchgeführt werden soll. Mit anderen Worten ist der lokalen Energiemarktplattform 4 der netztechnische Standort des Fahrzeuges 2 über die Anschlusskennung der Ladestation 1 bekannt. Dadurch ist es der lokalen Energiemarktplattform 4 möglich, lokale Netzrandbedingungen, beispielsweise eine maximale Ladeleistung am Netzanschlusspunkt der Ladestation 1 zu berücksichtigen und einzuhalten. Sollen insbesondere mehrere elektrische Fahrzeuge an mehreren erfindungsgemäßen Ladestation geladen werden, so können durch die gemeinschaftliche Abstimmung über die lokale Energiemarktplattform 4 Spitzenleistungen reduziert und Netzrandbedingungen eingehalten werden. Dies wird technisch durch das Übermitteln des Standortes ermöglicht. Hierzu kann eine Authentifizierung 41 nach Anschlusspunkt vorgesehen sein, das heißt eine Zuordnung des Fahrzeuges 2 beziehungsweise des Teilnehmers zum Netzanschlusspunkt beziehungsweise Netzknoten.

Mittels der Kommunikationseinheit 12 können weitere Daten beziehungsweise Informationen an die lokale Energiemarktplattform 4 übermittelt werden. Insbesondere fahrzeugspezifische Daten 43, beispielsweise Startzeitunkt und/oder Endzeitpunkt des Ladens und eine Anfangskapazität und/oder Endkapazität des Energiespeichers/Speichers des Fahrzeuges 2, und sowie teilnehmerspezifische Daten 44, beispielsweise ein maximales Entgelt, welches der Teilnehmer maximale bereit ist für die zu ladende Energiemenge zu entrichten, und/oder ein Informationen über den Tarif des Teilnehmers beziehungsweise des Fahrzeuges 2 an der lokalen Energiemarktplattform 4. Die fahrzeugspezifischen Daten 43 und/oder teilnehmerspezifischen Daten 44 können alternativ oder ergänzend durch das Fahrzeug 2 selbst und/oder durch ein mobiles Endgerät, beispielsweise durch eine App, eines Nutzers des Fahrzeuges 2 an die lokale Energiemarktplattform 4 übermittelt werden.

Die genannten Daten 41,...,44 können zu einem an die lokale Energiemarktplattform 4 gerichteten Gebot zusammengefasst werden. Dieses beziehungsweise die Daten 41,...,44 werden an die lokale Energiemarktplattform dann gesamtheitlich übermittelt 40.

Die lokale Energiemarktplattform 4 empfängt diese Daten, umfassend die Anschlusskennung 42. Weiterhin berechnet die lokale Energiemarktplattform 4 mittels einer Optimierung die für das Laden vorgesehene Ladeleistung 45. Hierbei werden durch die übermittelte Anschlusskennung 42 lokale Netzrandbedingungen eingehalten. Mit anderen Worten wird das Fahrzeug 2 oder die Mehrzahl der teilnehmenden elektrischen Fahrzeuge derart geladen, dass die jeweiligen lokalen Netzrandbedingungen, die über die jeweilige Anschlusskennung 42 bekannt sind, eingehalten werden. Dadurch werden insbesondere Spitzenlasten innerhalb des elektrischen Netzes oder eine Überlastung des elektrischen Netzes abgemildert und bestenfalls vermieden.

Die lokale Energiemarktplattform 4 übermittelt die berechnete beziehungsweise ermittelte Ladeleistung 45 an die Kommunikationseinheit 12 der Ladestation 2. Die Kommunikationseinheit 12 wandelt die empfangene Ladeleistung 45 in ein oder mehrere Steuersignale 46 und übermittelt diese an die Steuereinheit 14. Die Steuereinheit 12 steuert basierend auf den von der Kommunikationseinheit 12 empfangenen Steuersignalen das Laden des Fahrzeuges 2 und somit gemäß der durch den lokalen Energiemarkt 4 ermittelten Ladeleistung. Während des Ladens und/oder nach dem Laden kann durch eine Messeinrichtung eine Überprüfung erfolgen, ob das Laden gemäß der ermittelten Ladeleistungen erfolgt ist. Das Ergebnis der genannten Prüfung kann wiederum mittels der Kommunikationseinheit 12 an die lokale Energiemarktplattform 4 rückgemeldet beziehungsweise übermittelt werden.

Weiterhin könnte als Ausgestaltung der Teilnehmer einer lokalen Energiemarktplattform vorab, das heißt beispielsweise einen Tag im Voraus, der lokalen Energiemarktplattform 4 mitteilen, an welcher Ladestation er ein Laden beabsichtigt. Dies kann ebenfalls basierend auf einer geplanten Route/Strecke des Fahrzeuges erfolgen.

Durch die vorliegende Erfindung wird somit ein Laden von elektrischen Fahrzeugen innerhalb eines lokalen Energiemarktes unabhängig von ihrem geographischen Standort und ihrem elektrotechnischen Standort ermöglicht.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Ladestation
- 2: Fahrzeug
- 3: Netzanschlusspunkt
- 4: lokaler Energiemarkt
- 12: Kommunikationseinheit
- 14: Steuereinheit
- 40: Übermittlung
- 41: Authentifizierung
- 42: Anschlusskennung
- 43: fahrzeugspezifische Daten
- 44: teilnehmerspezifische Daten
- 45: ermittelte Ladeleistung
- 46: Steuersignal

## Patentansprüche

1. Ladestation (1) zum Laden eines oder mehrerer elektrischer Fahrzeuge (2), wobei die Ladestation (1) an ein elektrisches Netz (3) und mittels einer Anschlusskennung (42) an eine lokale Energiemarktplattform (4) angebunden ist, wobei die Ladestation (1) eine Kommunikationseinheit (12) und eine für das Steuern des Ladens vorgesehene Steuereinheit (14) umfasst, **dadurch gekennzeichnet, dass** die Kommunikationseinheit (12) dazu ausgebildet ist die Anschlusskennung (42) an die lokale Energiemarktplattform (4) zu übermitteln und eine für das Laden des Fahrzeuges (2) vorgesehene und von der übermittelten Anschlusskennung (42) abhängige zeitabhängige Ladeleistung (45) von der lokalen Energiemarktplattform (4) zu empfangen, wobei die Kommunikationseinheit (12) weiterhin dazu ausgebildet ist, aus der empfangenen zeitabhängigen Ladeleistung (45) ein entsprechendes Steuersignal (46) für die Steuereinheit (14) zu erzeugen und das Steuersignal (46) an die Steuereinheit (14) zum Laden des Fahrzeuges (2) zu übermitteln.

2. Ladestation (1) gemäß Anspruch 1, **dadurch gekennzeichnet, dass** die Kommunikationseinheit (12) zum Datenaustausch mit dem zu ladenden Fahrzeug (2) ausgebildet ist.

3. Ladestation (1) gemäß Anspruch 1 oder 2, **dadurch gekennzeichnet, dass** die Kommunikationseinheit (12) dazu ausgebildet ist, fahrzeugspezifische Ladedaten (43) von dem Fahrzeug (2) und/oder einem mobilen Endgerät eines Nutzers der Fahrzeuges (2) zu empfangen und diese an die lokale Energiemarktplattform (4) zu übermitteln, wobei die fahrzeugspezifischen Ladedaten (43) wenigstens eine maximale Ladeleistung des Fahrzeuges (2) und eine für das Laden des Fahrzeuges vorgesehene maximale Energiemenge umfassen.

4. Ladestation (1) gemäß Anspruch 3, **dadurch gekennzeichnet, dass** die fahrzeugspezifischen Ladedaten (43) einen Startzeitpunkt und/oder eine Endzeitpunkt des Ladens des Fahrzeuges (2) umfassen.

5. Ladestation (1) gemäß Anspruch 3 oder 4, **dadurch gekennzeichnet, dass** die fahrzeugspezifischen Ladedaten (43) einen Anfangskapazität und/oder eine Endkapazität einer Speicherkapazität des Fahrzeuges (2) umfassen.

6. Ladestation (1) gemäß einem der vorhergehenden Ansprüche, **dadurch gekennzeichnet, dass** die Kommunikationseinheit (12) dazu ausgebildet ist, mit der lokalen Energiemarktplattform (4) assoziierte Anmeldedaten (44) von dem Fahrzeug (2) und/oder einem mobilen Endgerät eines Nutzers des Fahrzeuges (2) zu empfangen und die empfangen Anmeldedaten (44) an die lokale Energiemarktplattform (44) zu übermitteln.

7. Ladestation (1) gemäß einem der vorhergehenden Ansprüche, **dadurch gekennzeichnet, dass** diese eine Messeinrichtung umfasst, welche dazu ausgebildet ist, die für das Laden des Fahrzeuges (2) verwendete Energiemenge zu erfassen.

8. Verfahren zum Laden eines elektrischen Fahrzeuges (2) mittels einer Ladestation (1), die an ein elektrisches Netz (3) und mittels einer Anschlusskennung (42) an eine lokale Energiemarktplattform (4) angebunden ist, wobei das Fahrzeug (2) zum Daten- und Energieaustausch mit der Ladestation (1) verbunden ist, **gekennzeichnet dadurch, dass** das Laden des Fahrzeuges (2) gemäß einer durch die lokale Energiemarktplattform (4) ermittelten Ladeleistung (45) erfolgt, wobei die lokale Energiemarktplattform (4)die zeitabhängigen Ladeleistung (45) derart ermittelt, dass mit der Anschlusskennung (42) assoziierte lokale Netzrandbedingungen des elektrischen Netzes (3) eingehalten werden.

9. Verfahren gemäß Anspruch 8, **gekennzeichnet dadurch, dass** mit der Anschlusskennung (42) ein elektrotechnischer Standort innerhalb des elektrischen Netzes (3) assoziiert ist.

10. Verfahren gemäß Anspruch 8 oder 9, **gekennzeichnet dadurch, dass** fahrzeugspezifische Ladedaten (43) erzeugt und an die lokale Energiemarktplattform (4) übermittelt werden, wobei die fahrzeugspezifische Ladedaten (43) wenigstens eine maximale Ladeleistung des Fahrzeuges und eine für das Laden des Fahrzeuges (2) vorgesehene maximale Energiemenge umfassen.

11. Verfahren gemäß Anspruch 10, **gekennzeichnet dadurch, dass** die fahrzeugspezifischen Ladedaten (43) einen Ladeanfangswert einer Speicherkapazität des Fahrzeuges (2) und/oder einen Ladenendwert der Speicherkapazität des Fahrzeuges (2) umfassen.

12. Verfahren gemäß Anspruch 10 oder 11, **gekennzeichnet dadurch, dass** das Übermitteln der fahrzeugspezifischen Ladedaten (43) an die lokale Energiemarktplattform (4) durch das Fahrzeug, durch die Ladestation (1) und/oder durch ein mobiles Endgerät eines mit der lokalen Energiemarktplattform (4) assoziierten Teilnehmers erfolgt.

13. Verfahren gemäß einem der Ansprüche 8 bis 12, **gekennzeichnet dadurch, dass** ein mit dem zu ladenden Fahrzeug (2) assoziierte Teilnehmer mittels Anmeldedaten (44) am lokalen Energiemarkt registriert ist, und die Anmeldedaten (44) vor dem Laden des Fahrzeuges (2) an die lokale Energiemarktplattform (4) übermittelt werden, wobei die lokale Energiemarktplattform (4) die übermittelte Anschlusskennung (42) den übermittelten Anmeldedaten (44) zuordnet.

14. Verfahren gemäß einem der Ansprüche 8 bis 13, **gekennzeichnet dadurch, dass** eine maximale Ladeleistung der Ladestation (1) an die lokale Energiemarktplattform (4) übermittelt wird.

15. Verfahren gemäß einem der Ansprüche 8 bis 14, **gekennzeichnet dadurch, dass** eine Authentifizierung des mit der lokalen Energiemarktplattform (4) assoziierten Teilnehmers durch die Ladestation erfolgt, wobei hierbei der an der lokalen Energiemarktplattform (4) registrierte Teilnehmer der Anschlusskennung (42) zugeordnet wird.
